# EUROPÄISCHE PATENTSCHRIFT

(11) **EP 1 296 768 B1**
(45) Veröffentlichungstag und Bekanntmachung des Hinweises auf die Patenterteilung: **31.03.2004**
(21) Anmeldenummer: 01273073.5
(22) Anmeldetag: 19.11.2001
(51) Int. Cl.: B03B 9/06

(54) **VERFAHREN UND VORRICHTUNG ZUR VOR-ORT-ENTSORGUNG VON INKONTINENZ-ARTIKELN**
METHOD AND DEVICE FOR THE IN-SITU EMPTYING OF INCONTINENCE ARTICLES
PROCEDE ET DISPOSITIF D'EVACUATION EN PLACE D'ARTICLES D'INCONTINENCE

(30) Priorität: 20.07.2001 DE 20111828 U
(43) Veröffentlichungstag der Anmeldung: 02.04.2003
(73) Patentinhaber: Svi Anlagen GmbH, 41379 Brüggen (DE); Ahe GmbH, 41836 Hückelhoven (DE)
(72) Erfinder: HOHNEN, Horst, 41366 Schwalmtal (DE); THOMAS, Gottfried, D-41836 Hückelhoven (DE)
(74) Vertreter: Richter, Joachim, Dipl.-Ing.
(86) Internationale Anmeldenummer: PCT/EP2001/013352
(87) Internationale Veröffentlichungsnummer: WO 2003/009942

(56) Entgegenhaltungen:
- DE-A- 19 853 520
- US-A- 5 292 075

## Beschreibung

Die Erfindung betrifft ein Verfahren und eine Vorrichtung zur Vor-Ort-Entsorgung von Inkontinenz-Artikeln, insbesondere aus einem Gewebevlies, einer saugfähigen Zellstoffschicht, ggf. mit in die Zellstoffschicht eingebettetem Gel oder saugfähigem Granulat, einer einseitigen Außenhülle aus Kunststoff und aus Klett/Klebestreifen, Gummibändern o. dgl. als Verschluss- und Haltemittel.

Durch die DE-A-691 24 107 ist ein Verfahren zur Behandlung von absorbierenden sanitären Papierprodukten zur Auftrennung derartiger Produkte in ihre Komponenten bzw. in Komponenten davon bekannt, die eine Form aufweisen, welche zum Rezyklieren bzw. zur Wiederverwendung geeignet ist, wobei die Produkte zumindest Kunststoff-, Zellulose- und superabsorbierende Polymer-("SAP"-) Feststofffraktionen umfassen, wobei das Verfahren folgende Schritte umfasst: Behandeln der Produkte in zerkleinerter Form in einem Bad einer wässrigen Lösung, um lösliches Material zu lösen und das SAP so zu behandeln, dass dessen Quellen in wässrigen Medien gehemmt, verhindert oder umgekehrt wird und Abtrennen der Lösung von löslichem Material von zumindest einer der Feststofffraktionen.

Die zur Durchführung dieses Verfahrens verwendete Vorrichtung umfasst eine drehbare und kippbare, zylindrische Trommel mit einem ersten und einem zweiten Ende, die eine wässrige Lösung beinhalten bzw. aufnehmen kann und aus einer horizontalen Position in eine gekippte Position kippbar ist, in welcher gekippten Position das zweite Ende tiefer als das erste Ende liegt, wobei das erste Ende zum Einbringen des Produktes in das Innere der Trommel und zum Beinhalten des Produktes darin ausgebildet ist, wobei das zweite Ende einen Auslass zur Abgabe des Produktes aus der Trommel besitzt, ferner Mittel zum Drehen der Trommel in zumindest einer von horizontalen und gekippten Positionen, Mittel zum Kippen der Trommel aus der horizontalen in die gekippte Position, wobei zur Behandlung von absorbierenden, sanitären Papierprodukten, um derartige Produkte in ihre Komponenten bzw. in Komponenten davon, deren Form zum Rezyklieren bzw. zur Wiederverwendung geeignet ist, aufzutrennen und zwar unter Verwendung von Mitteln zum Abrennen von Feststoffen von Flüssigkeiten in der Trommel, einen im Inneren der Trommel befindlichen Rührer, um ein Kommunizieren des Produktes in der Trommel zu bewirken. Mit diesem Verfahren und der hierfür ausgebildeten Vorrichtung soll erreicht werden, dass absorbierende, sanitäre Papierprodukte mit superabsorbierenden Polymer so behandelt werden können, dass einige oder alle der Komponenten derartiger Produkte in einer Form wiedergewonnen werden können, die das Rezyklieren oder eine andere Verwendung dieser Komponenten erleichtert. Eine Entsorgung ist nicht vorgesehen.

Des weiteren ist durch die DE-A-198 53 520 ein Verfahren und eine Vorrichtung zum Entsorgen von Hygienemüll bekannt. Um Volumen und Gewicht von Hygienemüll zu vermindern und die Belästigung durch üble Gerüche abzustellen wird hier der Hygienemüll nach mechanischer Zerkleinerung mit einer Hygieneflüssigkeit in Berührung gebracht, welche Wasser mit einem in transportablen Toiletten verwendbaren Sanitärzusatz in solchen Mengen enthält, dass der im Hygienemüll enthaltene Zellstoff mit Gelkömern zusammen mit den darin aufgenommenen Körperausscheidungen aufgelöst wird. Die gebrauchte Hygieneflüssigkeit wird in den Kanal abgeführt, wobei der verbleibende Rest des zerkleinerten Hygienemülls im wesentlichen aus Kunststoff nach dem Entwässern recycelt wird.

Absorbierende sanitäre Papierprodukte bestehen bekannterweise aus einem Vlies aus einem flüssigkeitsdurchlässigen Material, z. B. aus einer flüssigkeitsdurchlässigen Membran aus einem geeigneten Kunststoff oder aus gewebten Produkten aus Baumwolle, einer flüssigkeitsundurchlässigen hinteren Lage, abbaubaren Kunststofffilmen auf Stärkebasis, Webstoff oder Kautschuk und einem absorbierenden oder adsorbierenden Kern aus im Luftstrom aufgebrachten Zellstoffflusen und/oder aus synthetischen zellulosehaltigen gebundenen oder ungebundenen Polypropylenfilamenten, Hanf oder anderen adsorbierenden Fasermaterialien. Der Kern ist in einer Krepp-Umhüllung aus nassfesten Papierlagen oder einem Material mit ähnlichen Eigenschaften eingeschlossen oder eingewickelt. Die Umhüllung des Kerns kann atmungsaktiv, biologisch abbaubar, geruchshemmend oder auf andere Weise abbaubar oder löslich sein. Der Kern kann auch aus einem Material aus superabsorbierenden Polymer-(SAP)Material entsprechend der DE-A-691 24 107 bestehen. Windeln und Inkontinenz-Produkte benutzen druckempfindliche Klebstoffe für wiederverschließbare Klebebandlaschen oder ähnliche Verschlussmechanismen. Auch können diese Inkontinenz-Produkte mit druckempfindlichen Klebstoffen für Klebstofflinien versehen sein, um eine Befestigung z. B. in Form einer Einlage an der Unterwäsche der Trägerin bzw. Trägers befestigen zu können. Die Verwendung von absorbierenden, sanitären Papierprodukten ist zwar praktisch oder auch notwendig; ihre Entsorgung führt jedoch zu zahlreichen Problemen. Nach den bekannten Verfahren und mittels der bekannten Vorrichtungen können derart absorbierende sanitäre Papierprodukte so behandelt werden, dass einige oder alle der Komponenten derartige Produkte in einer Form wiedergewonnen werden können, die das Recyceln oder eine andere Verwendung dieser Komponenten erleichtert.

### Aufgabe, Lösung, Vorteil

Der vorliegenden Erfindung liegt daher die Aufgabe zugrunde, ein Verfahren und eine Vorrichtung der eingangs beschriebenen Art zu schaffen, mit denen Inkontinenz-Artikel unter Verwendung eines hohen Schneid- und Zerteileffektes in die einzelnen Komponenten zerlegt werden können, um die erhaltenen und zerkleinerten Feststoffkomponenten des Entsorgungsgutes vor Ort zu rezyklieren und somit das Gesamtprodukt wirtschaftlich zu entsorgen oder einer zentralen industriellen Verarbeitung zuzuführen, wobei die für die Zerkleinerung und für das Zertrennen des Entsorgungsgutes aufzuwendenden Kräfte reduziert werden sollen und außerdem soll ohne hohen Energieaufwand die an der Trommelinnenwand anhaftenden Feststoffkomponente bzw. zerkleinerten festen Bestandteile des Entsorgungsgutes entfernt werden.

Gelöst wird diese Aufgabe mit einer Vorrichtung mit den im Anspruch 1 angegebenen Merkmalen und mit einem Verfahren mit dem in Anspruch 6 angegebenen Verfahrensschritten.

Die erfindungsgemäße Vorrichtung zur Entsorgung von Inkontinenz-Artikeln gemäß dem Kennzeichen des Anspruchs 1 besteht hiernach aus einem, bevorzugterweise mit einem pultartigen Gehäuseabschnitt versehenen Grundgehäuse, in dem
- eine Einrichtung aus einem trommelartigen Gehäuse mit einer oberen Einfüllöffnung und einer im Innenraum des Gehäuses angeordneten, feststehenden oder um eine horizontale Drehachse wechselseitig mittels einer ersten Antriebseinrichtung in Umlauf versetzbare zylindrische Trommel mit einer Einfüllöffnung für das Entsorgungsgut und mit zwei die beiden Trommelöffnungen stimseitig verschließenden Wandplatten von denen die erste Wandplatte mit dem Trommelgehäuse verbunden ist und die zweite Wandplatte mittels einer zweiten Antriebseinrichtung in Trommeldrehachsenlängsrichtung verschiebbar oder verschiebbar und um ihre Mittelachse drehbar ausgebildet ist, wobei die beiden stimseitigen Trommelwandplatten an ihren einander gegenüberliegenden Wandflächen in den Trommelinnenraum hineinreichende Schneid, Trenn- und Zerkleinerungsmesser tragen, wobei das die Trommel aufnehmende Gehäuse mit je einem Zulauf oder einen gemeinsamen Zulauf für das Waschwasser, für eine Hygieneflüssigkeit zum Unterdrücken von Gerüchen und für Chemikalien u. a. auch Desinfektionsmittel in pulverförmigem oder flüssigem Zustand versehen ist, und wobei die Trommel im Bereich ihrer ersten feststehenden Wandplatte mit einer mit der ersten Antriebseinrichtung verbundenen hohlzylindrischen Nabe verbunden ist,
- eine über einen am Boden des trommelartigen Gehäuses angeordneten Ablaufstutzen mit dem Trommelinnenraum verbundenen Pumpe, vermittels der das Waschwasser mit den in dem Waschwasser gelösten Bestandteilen des Entsorgungsgutes aus dem Trommelinnenraum abgesogen und abgeleitet wird,
- eine Heizplatte unterhalb des Trommelgehäuses zum Trocknen der in der Trommel zurückgebliebenen, nicht vom Waschwasser gelösten Bestanteile des Entsorgungsgutes,
- eine staubsaugerartige Einrichtung zum Absaugen der im Trommelinnenraum verbliebenen, getrockneten nicht wasserlösbaren Bestandteile des Entsorgungsgutes durch die Nabe und zum Ansaugen der Luft aus dem Innenraum der Trommel durch die lochartigen Durchbrechungen in der umlaufenden Trommelwand zum Ablösen und Entfernen der an der inneren Trommelwandfläche haftenden festen Bestandteile des Entsorgungsgutes,
- ein mit der staubsaugerartigen Einrichtung verbundener Sammelbehälter mit einem die abgesogenen festen Bestandteile des Entsorgungsgutes aufnehmenden Behälter, Beutel oder Sack, angeordnet sind, wobei die Steuerung des Zulaufs für das Waschwasser, für die Hygieneflüssigkeit und für die Chemikalie, die Steuerung der ersten Antriebseinrichtung für den Trommelumlauf und die wechselseitige Trommel-Hin-und-Herbewegung und der zweiten Antriebseinrichtung für die horizontale Verschiebebewegung der verschiebbaren Wandplatte der Trommel und die Steuerung der Absaugeinrichtung für die festen Bestandteile des Entsorgungsgutes aus dem Trommelinnenraum und zur Steuerung der Pumpe in einem Programmschaltwerk zusammengefasst sind oder vermittels einer freiprogrammierbaren Steuerung steuerbar sind.

Das erfindungsgemäße Verfahren gemäß dem Kennzeichen der Anspruchs 14 umfasst folgende Verfahrensstufen:
a.) Befüllen der Trommel der Entsorgungsvorrichtung mit dem Entsorgungsgut,
b.) Befüllen der Trommel mit auf etwa 95° C erwärmten Waschwasser, Hygieneflüssigkeit zum Unterdrücken von Gerüchen und Chemikalien,
c.) wechselseitige Steuerung der Umlaufbewegung der Trommel,
d.) Verändern der Größe des Trommelinnenraumes und somit verändern des Pressdruckes auf das Entsorgungsgut im Trommelinnenraum durch horizontales Hin- und Herverschieben der verschieblichen Stimwandplatte der Trommel bei gleichzeitigem Zerkleinern des Entsorgungsgutes,
e.) Ableiten des Waschwassers mit dem in diesem gelösten Bestandteilen des Entsorgungsgutes,
f.) Trocknen der im Trommelinnenraum verbliebenen wasserunlöslichen Bestandteile des Entsorgungsgutes bei gleichzeitiger Trommel-Hin-und-Herbewegung und falls erforderlich Teilchenzerkleinerung,
g.) Absaugen oder Ableiten der getrockneten wasserunlöslichen Bestandteile des Entsorgungsgutes aus dem Trommelinnenraum in einen Entsorgungsbehälter,
h.) Absaugen der Luft aus dem Trommelinnenraum durch die lochartigen Durchbrechungen in der Trommelwand und gleichzeitigem Mitreißen (Losreißeffekt) der an der Trommelinnenwand haftenden Bestandteile des Entsorgungsgutes bei gleichzeitigem Verschieben der verschieblichen Trommelwandplatte in Richtung zur feststehenden Trommelwandplatte zur Verkleinerung des Trommelinnenraumes bei gleichzeitiger Erhöhung der Durchtrittsgeschwindigkeit der Luft durch die lochartigen Durchbrechungen,
i.) Weiterleiten der in Stufe h.) abgesogenen Luft mit den festen, zerkleinerten Bestandteilen des Entsorgungsgutes und Trennen von Luft und der festen Bestandteile mit anschließendem Sammeln der festen Bestandteile zur Entsorgung oder zu Restwertstoffen oder Zuführen als Restwertstoffe dem entsprechenden Kreislauf.

Mit der erfindungsgemäßen Vorrichtung und bei entsprechender Anwendung dieser Vorrichtung ist es möglich, Inkontinenz-Artikel wirtschaftlich vor Ort zu entsorgen mit der Möglichkeit, die einzelnen erhaltenen Komponente, soweit zulässig abzuleiten oder gegebenenfalls zu pelletieren. Dadurch, dass während des Zerkleinerungsprozesses des Entsorgungsgutes im Innenraum der Trommel der Entsorgungsvorrichtung in seiner Größe in einem vorgegebenen Zyklus vergrößert und verkleinert wird, wird auf das Entsorgungsgut im Innenraum der Trommel ein Pressdruck erzeugt, der das Zerkleinern des Entsorgungsgutes vermittels der gegeneinander arbeitenden Messer an den stirnseitigen Wandplatten der Trommel unterstützt wird, ohne dass es hierzu eines hohen Kräfte- bzw. Energieaufwandes bedarf. Nach dem Entfernen des Waschwassers mit den in diesen gelösten Bestandteilen des Entsorgungsgutes verbleibt zunächst im Innenraum der Trommel die zerkleinerte Feststoffkomponente des Entsorgungsgutes, die ebenfalls vermittels einer staubsaugerartigen Einrichtung aus dem Innenraum der Trommel abgesogen wird. An der Innenwandfläche der Trommel verbleiben dann an der Wandfläche haftende Feststoffteilchen der Entsorgungskomponente, die durch Abziehen der Luft aus dem Innenraum der Trommel durch die lochartigen Durchbrechungen in der Trommelwand entfernt werden. Durch das Absaugen der Luft aus dem Innenraum der Trommel wird ein sogenannter Losreißeffekt für die an der Trommelwandfläche haftenden Kunststoffteilchen des Entsorgungsgutes erzeugt. Auch hier wird durch wechselweises Ändern der Größe des Innenraumes der Trommel die Luftdurchtrittsgeschwindigkeit durch die lochartigen Durchbrechungen in der Trommelwand gesteuert, so dass bei einem kleinen Innenraum eine hohe Luftdurchtrittsgeschwindigkeit bei konstantem Volumenstrom erreicht wird. Die Kunststoffteilchen des Entsorgungsgutes werden mit der Luft von der staubsaugerartigen Einrichtung angesogen in dieser getrennt, wobei die hier erhaltene Feststoffkomponente des Entsorgungsgutes in einer beutelförmigen Einrichtung aufgefangen und der Entsorgung zugeführt wird.

Der besondere Vorteil liegt in der Vor-Ort-Entsorgung der aufbereiteten Inkontinenz-Artikel, wobei auch eine stationsweise Entsorgung z. B. in Altenheimen, Krankenhäuser und Kinderheimen möglich ist. Auch ein Pelletieren der Restwertstoffe, wie Kunststoffe und Zellstoffe ist möglich. Sowohl einzelne als auch größere Mengen an Inkontinenz-Artikeln können entsorgt werden. Außerdem können aus dem Endprodukt, z. B. vermittels eines Filters alle Feststoffe herausgefiltert werden, die dann pelletiert werden können. Der gesamte Prozess kann bei niedrigen Temperaturen und auch bei höheren Temperaturen durchgeführt werden. Vorteilhaft ist es, für kurze Zeit den Prozess bei Temperaturen oberhalb von 70° C durchzuführen, um ein Auflösen der Pellets zu erreichen. Die Bestückung der Vorrichtung kann von Hand oder auch maschinell und automatisch, z. B. vermittels Förderbänder, vorgenommen werden. Der besondere Vorteil, der mit der erfindungsgemäßen Vorrichtung erreicht wird, besteht darin, dass eine Entsorgung vor Ort ohne Lagerung und ohne Zwischentransporte möglich ist.

Vorteilhafte Ausgestaltungen der Erfindung sind Gegenstand der Unteransprüche.

Nach einer weiteren vorteilhaften Ausgestaltung der Erfindung ist das Trommelgehäuse der in dem Gehäuse feststehend angeordneten Trommel mit einer stirnseitigen mit der Trommel fest verbundenen Wandplatte und mit einer in Trommeldrehachsenlängsrichtung verschiebbaren und um die Trommeldrehachsentängsrichtung umlaufend angetriebenen stimseitigen Wandplatte mit einer mittels Klappen verschließbaren Entnahmeöffnung für das Entsorgungsgut versehen. Das die Trommel aufnehmende Gehäuse weist eine mit der verschließbaren Trommelentnahmeöffnung deckende bzw. fluchtende Entnahmeöffnung mit einer sich an diese anschließenden Förder-Verdichtungsschnecke zum Ableiten separierter Kunststoffe bzw. Kunststoffteilchen auf.

Die Erfindung sieht ferner eine Ausgestaltung vor, nach der das Trommelgehäuse der in dem Gehäuse feststehend angeordneten Trommel mit einer stimseitigen mit der Trommel fest verbundenen Wandplatte und mit einer in Trommeldrehachsenlängsrichtung verschiebbaren und um die Trommeldrehachsenlängsrichtung umlaufend angetriebenen stimseitigen Wandplatte mit einer Entnahmeöffnung für das Entsorgungsgut versehen ist, wobei das die Trommel aufnehmende Gehäuse eine mit der Trommelentnahmeöffnung deckende bzw. fluchtende mittels Klappen verschließbare Entnahmeöffnung mit einer sich an diese anschließenden Förder-Verdichtungsschnecke zum Ableiten separierter Kunststoffe bzw. Kunststoffteilchen aufweist.

Bei in dem Gehäuse umlaufend angetriebener Trommel wird vermittels einer Steuerung der Umlauf der Trommel beendet, wenn die Entnahmeöffnung des Trommelgehäuses der Trommel und die Entnahmeöffnung des Gehäuses miteinander fluchten.

### Kurzbeschreibung der Zeichnung

Ein Ausführungsbeispiel des Erfindungsgegenstands ist in der Zeichnung beispielsweise dargestellt und zwar zeigt:
- Fig. 1: in einer schaubildlichen Vorderansicht die Entsorgungsvorrichtung mit abgenommener Wandverkleidung,
- Fig. 2: eine schaubildliche Seitenansicht der Entsorgungsvorrichtung mit abgenommener Wandverkleidung,
- Fig. 3: eine schaubildliche Rückansicht der Entsorgungsvorrichtung mit abgenommener Wandverkleidung,

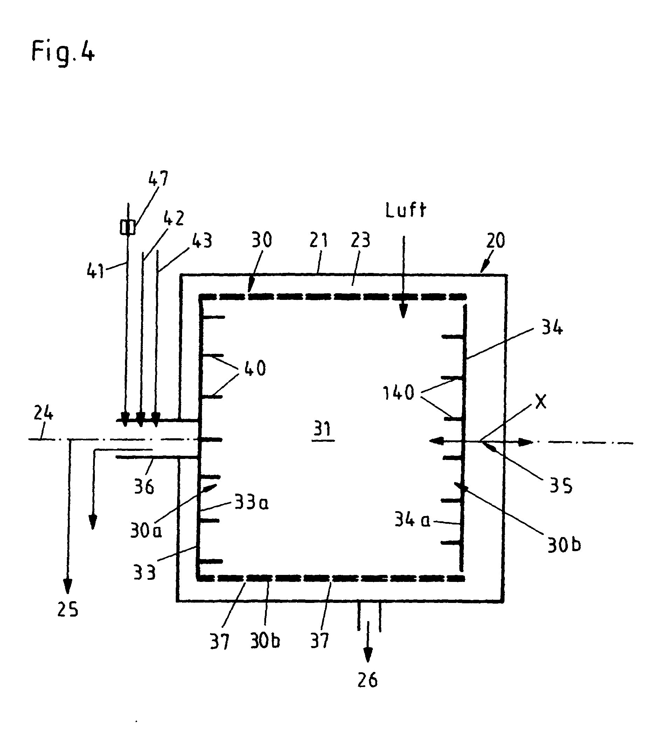

- Fig. 4: eine schematische Darstellung der im Gehäuse der Entsorgungsvorrichtung angeordneten Trommel mit einer feststehenden und einer in Drehachsenlängsrichtung verschiebbaren stimseitigen Wandplatte,
- Fig. 5: teils in Ansicht teils in einem senkrechten Schnitt die Entsorgungsvorrichtung,

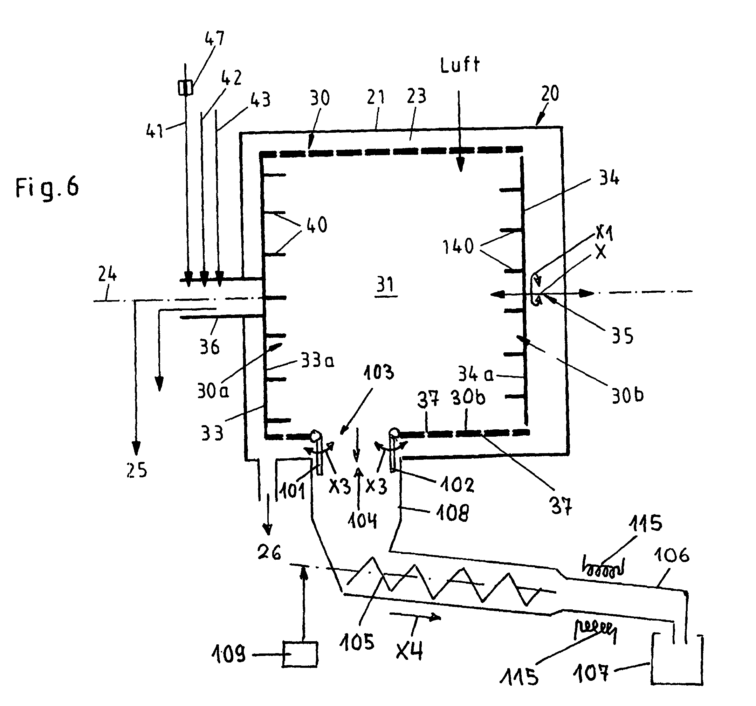

- Fig. 6: eine schematische Darstellung der im Gehäuse der Entsorgungsvorrichtung angeordneten feststehenden oder umlaufend angetriebenen Trommel mit einer mit dem Trommelgehäuse fest verbundenen stimseitigen Wandplatte und mit einer in Trommetdrehachsenlängsrichtung verschiebbaren und um die Trommeldrehachsenlängsrichtung umlaufend angetriebenen stimseitigen Wandplatte, wobei das Trommelgehäuse mit einer mittels Klappen verschließbaren Entnahmeöffnung für das Entsorgungsgut versehen ist und das die Trommel aufnehmende Gehäuse eine mit der versch!ießbaren Trommelentnahmeöffnung sich deckende Entnahmeöffnung mit einer sich an diese anschließenden Förder-Verdichtungsschnecke zum Ableiten separierter Kunststoffe bzw. Kunststoffteilchen aufweist,

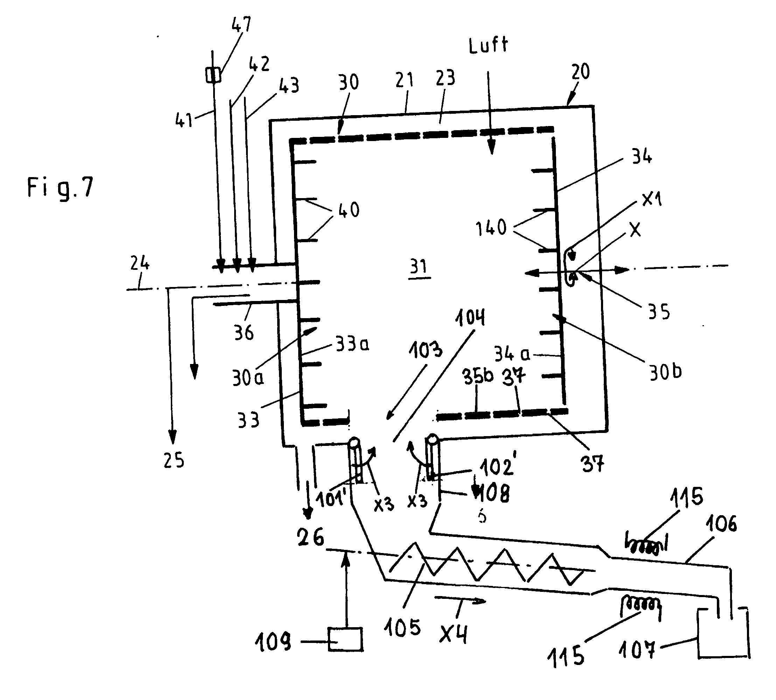

- Fig. 7: eine schematische Darstellung der im Gehäuse der Entsorgungsvorrichtung angeordneten feststehenden oder umlaufend angetriebenen Trommel mit einer mit dem Trommelgehäuse fest verbundenen stirnseitigen Wandplatte und mit einer in Trommeldrehachsenlängsrichtung verschiebbaren und um die Trommeldrehachsenlängsrichtung umlaufend angetriebenen stimseitigen Wandplatte, wobei das Trommelgehäuse mit einer Entnahmeöffnung für das Entsorgungsgut versehen ist und das die Trommel aufnehmende Gehäuse eine mit der Trommelentnahmeöffnung sich deckende, vermittels Klappen verschließbaren Entnahmeöffnung mit einer sich an diese anschließenden Förder- und Verdichtungsschnecke zum Ableiten separierte Kunststoffe bzw. Kunststoffteilchen aufweist,
- Fig. 8: eine schematische Darstellung der im Gehäuse der Entsorgungsvorrichtung angeordneten Trommel mit einer mit dem Trommelgehäuse fest verbundenen stimseitigen Wandplatte und mit einer in Trommeldrehachsenlängsrichtung verschiebbaren und eine die Trommeldrehachsenlängsrichtung umlaufend angetriebenen stirnseitigen Wandplatte, die auf einer sich durch den Innenraum der Trommel erstreckenden Achse angeordnet ist,
- Fig. 9: eine schematische Darstellung der im Gehäuse der Entsorgungsvorrichtung angeordneten feststehenden Trommel mit einer von der Gehäusewand gebildeten stirnseitigen Wandplatte und mit einer in Trommeldrehachsenlängsrichtung verschiebbaren und eine die Trommeldrehachsenlängsrichtung umlaufend angetriebenen stirnseitigen Wandplatte und
- Fig. 10: einen senkrechten Teilschnitt durch das Gehäuse und die Trommel mit einer mit dem Trommelgehäuse fest verbundenen stirnseitigen Wandplatte, in der eine schnellumlaufende angetriebene Messer tragende Scheibe angeordnet ist.

### Detaillierte Beschreibung der Erfindung und bester Weg zur Ausführung der Erfindung

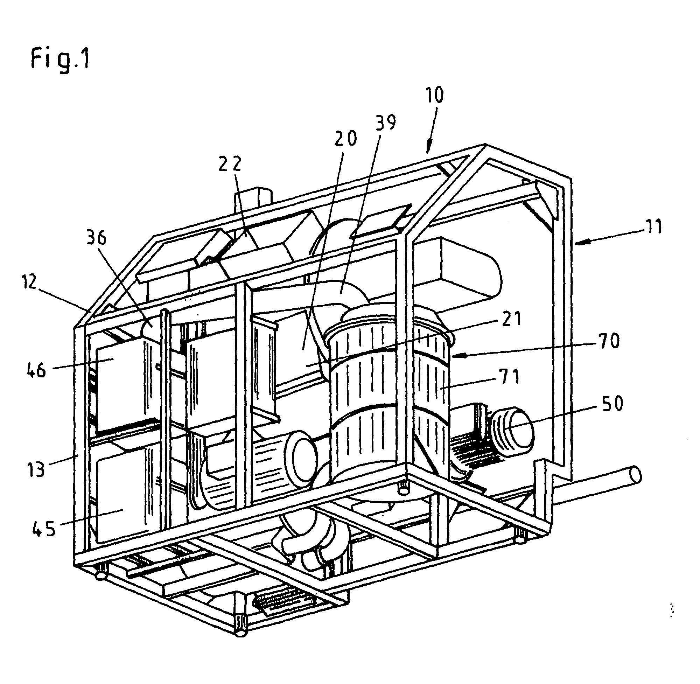

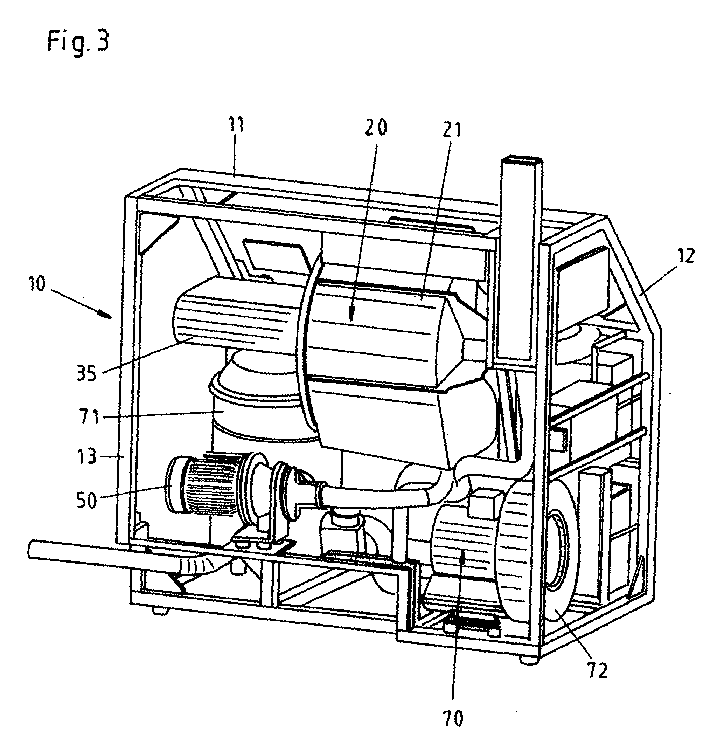

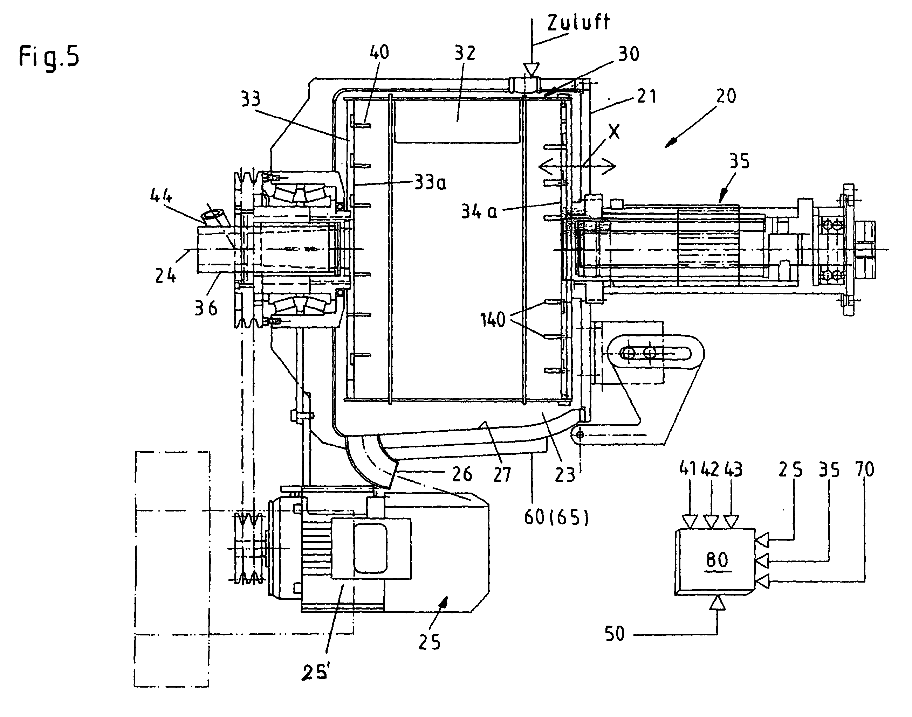

Gemäß Fig. 1 bis 3 besteht die Vorrichtung 10 zur Entsorgung von Inkontinenz-Artikeln aus einem Grundgehäuse 11 mit einem pultartigen oberen Gehäuseabschnitt 12. Das Grundgehäuse 11 selbst wird von einem Rahmengestell 13 gebildet, das mit in der Zeichnung nicht dargestellten Wandplatten verkleidet ist. In dem Rahmengestell 13 des Grundgehäuses 11 ist eine Einrichtung 20 angeordnet, die aus einem trommelartigen Gehäuse 21 mit einer oberen Einfüllöffnung 22 besteht. Am Boden 27 des Gehäuses 21 ist ein Ablaufstutzen 26 vorgesehen. Der Innenraum des trommelartigen Gehäuses 21 ist mit 23 bezeichnet. Im Innenraum 23 des trommelartigen Gehäuses 21 ist eine zylindrische Trommel 30 angeordnet, die um eine horizontale Drehachse 24 wechselseitig mittels einer Antriebseinrichtung 25 in Umlauf versetzbar ist. Die Antriebseinrichtung 25 ist umsteuerbar, so dass die zylindrische Trommel 30 in einem vorgegebenen Zyklus sowohl in der Einrichtung als auch in der anderen Richtung umlaufend ist. Die Antriebseinrichtung 25 ist bevorzugterweise als Antriebsmotor 25' ausgebildet. Dieser Antriebsmotor 25' steht über einen Riementrieb mit einer Nabe oder Stutzen 36 in Verbindung, die mit der Trommel 30 einendseitig verbunden ist über die die Trommel 30 in Umlauf versetzt wird. Der Stutzen 36 ist als Hohlzylinder ausgebildet (Fig. 5). Die Trommei 30 ist mit einer Elnfüllöffnung 32 für das Entsorgungsgut versehen.

Die Trommel 30 ist als zylindrischer Hohlkörper ausgebildet und stirnseitig offen ausgebildet. Die beiden Trommelöffnungen 30a, 30b sind mit Wandplatten 33, 34 verschlossen, von denen die Wandplatte 33 feststehend oder mit dem Gehäuse der Trommel 30 fest verbunden ist und die Wandplatte 34 in Drehachsenlängsrichtung verschieblich ausgebildet ist. Die umlaufende Wand der Trommel 30 ist mit lochartigen Durchbrechungen 37 versehen.

Die in Pfeilrichtung X in den Innenraum 31 der Trommel 30 verschiebbare Wandplatte 34 steht mit einer Antriebseinrichtung 35 in Verbindung, die bevorzugterweise als Spindelantrieb ausgebildet ist, jedoch besteht auch die Möglichkeit, die Verschiebebewegung der Trommelwandplatte 34 hydraulisch vorzunehmen (Fig. 5).

Die beiden Trommelwandplatten 34, 35 tragen an ihren aneinander gegenüberliegenden Wandflächen 33a, 34a in den Trommelinnenraum 31 hineinreichende Schneid-, Trenn- und Zerkleinerungsmesser 40, 140. Von den beiden stirnseitigen Wandplatten 34, 35 nimmt die Wandplatte 34 nicht an der Umlaufbewegung der Trommel 30 teil, während die andere Wandplatte 33, die mit dem Gehäuse der Trommel 30 verbunden ist, mit der Trommel 30 umläuft. Die Schneid-, Trenn- und Zerkleinerungsmesser 40, 140 kämmen dann miteinander. Durch die Verschiebbarkeit der stimseitigen Wandplatte 34 der Trommel 30 ist die Größe des Innenraumes 31 der Trommel 30 veränderbar und kann somit dem jeweiligen Zerkleinerungsgrad angepasst werden.

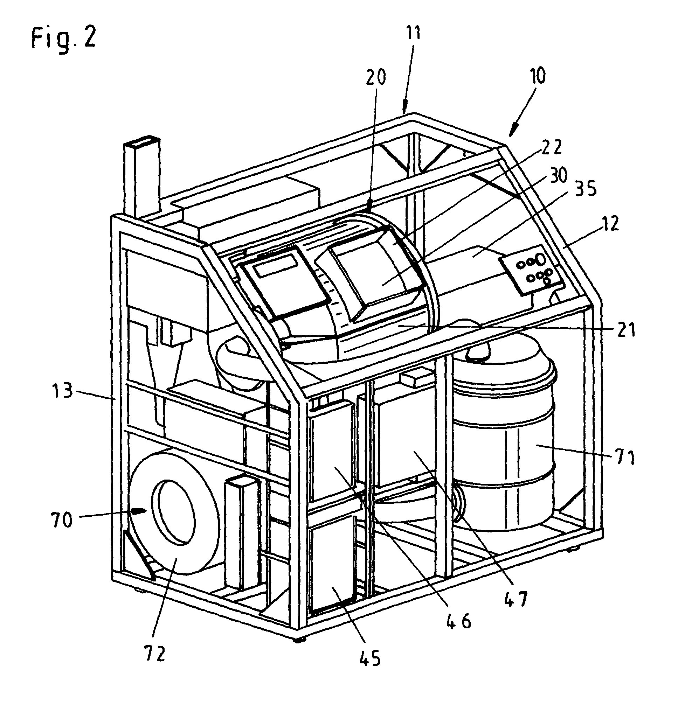

Das die Trommel 30 aufnehmende Gehäuse 21 ist mit einem Zulauf 41 für Waschwasser, einem Zulauf 42 für eine Hygieneflüssigkeit zum Unterdrücken von Gerüchen und einem Zulauf 43 für Chemikalien, z. B. Desinfektionsmittel, in pulverförmigen oder flüssigem Zustand versehen, wobei auch die Möglichkeit besteht, den Zulauf einzeln vorzunehmen oder über einen Zuführungsstutzen 44, der in den Innenraum der Nabe 36 geführt ist, deren Innenraum wiederum mit dem Innenraum 31 der Trommel 30 in Verbindung steht (Fig. 5). Der Vorratsbehälter 45 nimmt die Chemikalien auf und der Vorratsbehälter 46 die Hygieneflüssigkeit (Fig. 2).

Es ist vorteilhaft, wenn die Zudosierung des Waschwassers, der Hygieneflüssigkeit und der Chemikalien nacheinander erfolgt. In der Zuführungsleitung 41 für das Waschwasser ist eine Heizvorrichtung 47, beispielsweise ein Durchlauferhitzer, zum Erwärmen des Waschwassers auf etwa 95° C angeordnet (Fig. 2), wobei die Heizvorrichtung 47 im Bereich des Gehäuses 21, das die Trommel 30 aufnimmt, auch angeordnet sein kann.

Es ist ferner in dem Rahmengestell 13 des Grundgehäuses 11 eine Pumpe 50 angeordnet. Diese Pumpe 50 steht mit einem Ablaufstutzen 26 in Verbindung, der am Boden des trommelartigen Gehäuses 21 der Entsorgungsvorrichtung 10 vorgesehen ist und über den das Waschwasser mit den in dem Waschwasser gelösten Bestandteilen des Entsorgungsgutes aus dem Trommelinnenraum 31 und somit aus dem trommelartigen Gehäuse 21, z. B. vermittels einer Saugpumpe, abgesogen wird.

Unterhalb des Trommelgehäuses 21 ist zum Trocknen der in der Trommel 30 zurückgebliebene, nicht vom Waschwasser gelösten Bestandteile des Entsorgungsgutes eine Heizplatte 60 angeordnet (Fig. 5).

Zum Absaugen der im Trommelinnenraum 31 verbliebenen, getrockneten, nicht wasserlösbaren Bestandteile des Entsorgungsgutes durch die Nabe 36 ist eine staubsaugerartige Einrichtung 70 vorgesehen, vermittels der gleichzeitig die Luft aus dem Innenraum 31 der Trommel 30 durch die lochartigen Durchbrechungen 37 in der umlaufenden Trommelwand 30b zum Ablösen und Entfernen der an der inneren Trommelwandfläche haftenden festen Bestandteile des Entsorgungsgutes angesogen wird. Die Einrichtung 70 weist einen Motor 72 auf, über den das im Trommelinnenraum 31 befindliche Gut abgesogen wird. Ein mit der staubsaugerartigen Einrichtung 70 verbundene Sammelbehälter 71 dient zur Aufnahme der abgesogenen festen Bestandteile des Entsorgungsgutes, wobei diese Bestandteile in einem Beutel oder Sack, der in dem Sammelbehälter 71 angeordnet ist, aufgenommen wird. Der Innenraum der Nabe 36 bzw. die Nabe 36 steht über eine Schlauchleitung 39 mit dem Sammelbehälter 71 in Verbindung (Fig. 1).

Die Steuerung des Zulaufes für das Waschwasser, für die Hygieneflüssigkeit und für die Chemikalie, die Steuerung der Antriebseinrichtung 25 für den Trommelumlauf und für die wechselseitige Trommel-Hin-und-Herbewegung und der Antriebseinrichtung 35 für die horizontale Verschiebebewegung der verschiebbaren Wandplatte 34 der Trommel 30 und die Steuerung der Absaugeinrichtung 70 für die festen Bestandteile des Entsorgungsgutes aus dem Trommelinnenraum 31 und für die Pumpe 50 sind in einem Programmschaltwerk 80 zusammengefasst, wobei auch frei programmierbare Steuerungen eingesetzt werden können.

Die erfindungsgemäße Vorrichtung 10 zur Entsorgung von Inkontinenz-Artikeln wird wie folgt verwendet:

Die Vorrichtung 10 hat in etwa die Funktion wie eine herkömmliche Waschmaschine. Die Trommel 30 wird mit Waschwasser und Hygieneflüssigkeit sowie mit Chemikalien befüllt, wobei letztere desinfizierende Eigenschaften aufweist. Bei Zulauf der Waschflüssigkeit in die Trommel 30 bzw. in das Gehäuse 21, welches die Trommel 30 aufnimmt, durchläuft vor Eintritt in die Vorrichtung 10 einen Durchlauferhitzer 41, damit die Waschflüssigkeit auf 95 °C erhitzt wird. Die Zuführung des Waschwassers, der Hygieneflüssigkeit und der Chemikalien erfolgt durch die Nabe 36 in den Innenraum 31 der Trommel 30. Vor der Zuführung der Waschflüssigkeit, der Hygieneflüssigkeit und der Chemikalie wird über die Einfüllöffnung 22 bzw. 32 das Entsorgungsgut eingegeben. Es erfolgt dann die Inbetriebnahme der Trommel 30, die in Umlauf versetzt wird und zwar wechselweise erfolgt ein rechtsseitiger Umlauf und ein linksseitiger Umlauf und zwar in vorgegebenen Zeitintervallen. Während dieser Bewegung der Trommel 30 wird die verschiebliche Wandplatte 34 an der Stirnseite der Trommel 30 in den Innenraum 31 der Trommel 30 verschoben, also in Richtung zur feststehenden Wandplatte 33. Das Verschieben der Wandplatte 34 erfolgt ebenfalls in einem vorgegebenen Rhythmus und zwar einmal in Richtung zur feststehenden Wandplatte 33 und einmal in einer Richtung entgegen der feststehenden Wandplatte 33, so dass das Entsorgungsgut im Innenraum 31 der Trommel 30 zusammengedrückt und wechselweise entspannt wird. Durch die ständige Bewegung der verschieblichen Wandplatte 34 in einem vorgegebenen Rhythmus wird das Entsorgungsgut zusammengedrückt, worauf dann wieder eine Entspannungsphase eintritt und erneut bei einer Vorbewegung der verschieblichen Wandplatte 34 dann wieder das Entsorgungsgut zusammengedrückt wird. Dabei erfolgt ein Verteilen und Zerkleinern und Zertrennen des Entsorgungsgutes mittels der Schneid-, Trenn- und Zerkleinerungsmesser 40, 140 an den einander gegenüberliegenden Wandflächen der beiden Wandplatten 33, 34. Die verschiebliche Wandplatte 34 wird gegen die feststehende Wandplatte 33 so weit verschoben, dass die Schneid-, Trenn- und Zerkleinerungsmesser 40, 140 miteinander kämmen. Dadurch wird ein unterschiedlicher Zerteil- und Schneideeffekt des Entsorgungsgutes erreicht.

Die Anordnung der Schneid-, Trenn- und Zerkleinerungsmesser 40, 140 zueinander ist unterschiedlich, so dass jeweils zwei Messer 40, 140 mit einem kleinen Abstand voneinander zusammenwirken, wohingegen zwei andere zusammenwirkende Messer 40, 140 in einem größeren Abstand voneinander sich bewegen und tätig werden. Durch diese Maßnahme werden die Kräfte in der Vorrichtung wesentlich reduziert; mit einem geringen Kräfte- und Energieaufwand ist somit das Zerkleinern und Zerteilen des Entsorgungsgutes möglich.

Während des Zerkleinerungsvorganges wird das Entsorgungsgut, soweit dieses im Wasser lösbare Komponenten enthält, aufgelöst, wobei die Zellstoffanteile sich in Fasern auflösen. Nachdem alle wasserlöslichen Materialien und Substanzen des Entsorgungsgutes im Waschwasser gelöst sind, wird das Waschwasser mit den in diesem gelösten Stoffen vermittels der Pumpe 50 abgepumpt.

Es verbleiben somit nur die festen Bestandteile des Entsorgungsgutes im Innenraum 31 der Trommel 30, wobei es sich bei diesen festen Bestandteilen des Entsorgungsgutes um alle Kunststoffteile, Klebestreifen, Gummizüge u. dgl. handelt. Da die umlaufende Wand der Trommel 30 mit lochartigen Durchbrechungen 37 versehen ist, werden durch diese das Waschwasser mit den in diesem gelösten Anteile des Entsorgungsgutes abgepumpt

Die unterhalb des Gehäuses 21 angeordnete Heizvorrichtung 65 in Form einer Heizplatte 60 wird in Betrieb gesetzt und die von dieser Heizvorrichtung 65 erzeugte Wärme wird zum Trocknen der festen Bestandteile im Innenraum 31 der Trommel 30 verwendet. Die Heizvorrichtung 65 wird auch während des Lösungsvorganges der lösbaren Bestandteile des Entsorgungsgutes im Waschwasser dann eingesetzt, wenn die Wassertemperatur absinken sollte. Bevorzugterweise sollte für den Lösungsvorgang die Wassertemperatur bei 95 °C gehalten werden.

Vermittels der Heizvorrichtung 65 wird das Gehäuse 21 von unten her erwärmt, so dass die Luft in der Trommel 30 und somit auch die sich im Trommelinnenraum 31 befindlichen Bestandteile des Entsorgungsgutes ebenfalls erwärmt werden. Während dieses Erwärmungsvorganges wird die Trommel 30 in eine Umlaufbewegung versetzt und zwar wechselweise einmal in der einen Richtung und einmal in der anderen Richtung, so dass sich die festen Bestandteile von der Innenwandfläche der Trommel 30 lösen können. Über die Nabe 36 werden die Reste aus der Trommel gesogen. Die Trommel bleibt weiterhin in Bewegung, d. h. wird weiterhin umlaufend angetrieben. Auch bei diesem Vorgang wird der Innenraum 31 der Trommel 30 in seiner Größe durch Verschieben der verschieblichen Wandplatte 34 verändert, so dass die Luft ausschließlich durch die lochartigen Durchbrechungen 37 in der Wand der Trommel 30 hindurchströmen können. Das Absaugen der Luft aus dem Innenraum 31 der Trommel 30 erfolgt mittels der staubsaugerartigen Einrichtung 70. Die Luft wird mittels dieser Einrichtung durch die lochartigen Durchbrechungen 37 in der Wand der Trommel 30 abgesogen, wobei gleichzeitig vermittels eines erreichten Losreißeffektes diejenigen Bestandteile des Entsorgungsgutes mitgerissen werden, die an der Innenwandfläche der Trommel 30 anhaften und insbesondere im Bereich der lochartigen Durchbrechungen 37 liegen. Durch diese Maßnahme wird ein Verstopfen der lochartigen Durchbrechungen 37 in der Trommelwand vermieden. Ein besonders hoher Luftdurchtrittsgeschwindigkeitsgrad wird erreicht, wenn durch entsprechendes Verschieben der Wandplatte 34 der Innenraum 31 der Trommel 30 sehr klein gehalten wird. Dies hat zur Folge, dass alle an der Innenwandfläche der Trommel 30 haftenden und eventuell die lochartigen Durchbrechungen 37 verschließenden Bestandteile des Entsorgungsgutes mit der Luft abgesogen werden. Durch Verkleinerung des Innenraumes 31 der Trommel 30 wird die Luftdurchtrittsgeschwindigkeit durch die lochartigen Durchbrechungen 37 erhöht und es ist dadurch gewährleistet, dass alle im Bereich der lochartigen Durchbrechungen 37 anhaftenden Bestandteile des Entsorgungsgutes mit abgeleitet werden. Die abgesogene Luft aus der Trommel 30 bzw. dem Gehäuse 21 der Vorrichtung 10 wird in der staubsaugerartigen Einrichtung 70 von den festen Bestandteilen getrennt. Die festen Bestandteile werden in einem Sammelbehälter oder Sammelbeutel aufgefangen. Während des Absaugvorganges wird die Trommel 30 weiterhin in wechselseitigem Umlauf versetzt und zwar solange, bis alle Feststoffteilchen abgesogen sind. Die abgesogenen festen Bestandteile werden als feste Restpartikel über den Auffangbehälter als Kunststoffmüll entsorgt.

Bei der in Fig. 6 gezeigten Ausführungsform ist die Trommel 30 in dem Gehäuse 21 feststehend angeordnet. Die stirnseitige Wandplatte 33 ist mit dem Gehäuse 21 der Vorrichtung verbunden. Die stimseitige Wandplatte 34 dagegen ist in Pfeilrichtung X1 umlaufend angetrieben. Außerdem wird die Wandplatte 34 in Pfeilrichtung X bewegt. Das Trommelgehäuse der Trommel 30 weist im unteren Bereich eine Entnahmeöffnung 103, über die das Entsorgungsgut aus dem Innenraum 31 der Trommel 30 entnommen wird; ein Absaugen des Entsorgungsgutes erfolgt in diesem Fall nicht. Die Entnahmeöffnung 30 ist im Betriebszustand der Vorrichtung mittels verschwenkbarer Klappen 101, 102 verschlossen. Anstelle von Klappen können auch andere Verschlussmittel eingesetzt werden, wie z. B. Schieber o. dgl. Das Verschwenken der Klappen 101, 102 erfolgt in Pfeilrichtung X3. Als Antriebsmittel für die Klappen 101, 102 können hydraulische, elektromotorische oder sonstige geeignete Antriebe eingesetzt werden.

Die Wand des Gehäuses 21 weist ebenfalls eine Entnahmeöffnung 104 auf, die sich mit der Entnahmeöffnung 103 der Trommel 30 deckt bzw. mit dieser fluchtend ist.

An diese Entnahmeöffnung 104 des Gehäuses 21 schließt sich, gegebenenfalls unter Zwischenschaltung eines trichterförmigen Stutzens 108 eine Förder-Verdichtungsschnecke 105 an, die über einen Antrieb 109 angetrieben wird und die die Kunststoffteilchen des Entsorgungsgutes bei gleichzeitiger Vorwärtsbewegung in Pfeilrichtung X4 verdichtet und die die verdichteten Kunststoffteilchen einer rohrartigen Ableitung 106 zuführt, die bevorzugterweise einen kleineren Durchmesser gegenüber dem Durchmesser der Förder-Verdichtungsschnecke 105 aufweist. Die durch die Ableitung 106 geführten Kunststoffteilchen in Form von Pellets werden in der Ableitung 106 erweicht. Hierzu wird die Ableitung 106 beheizt. Die rohrartige Ableitung 106 ist bevorzugterweise von einer Heizspirale 115 umgeben. Jedoch auch andere Heiz- und Erwärmungseinrichtungen können eingesetzt werden. Der Zweck des Erweichens der Kunststoffteilchen bzw. der Kunststoffpellets ist der, das bei den Kunststoffen sonst vorhandene Rückstellvermögen zu verringern bzw. gänzlich auszuschalten. Die so behandelten Kunststoffteilchen gelangen dann in einen Auffangbehälter 107. Während des Zerkleinerungsvorganges sind die Klappen 101, 102 geschlossen und werden dann nach Beendigung des Zerkleinerungsvorganges zum Ableiten des Trommelinhaltes geöffnet. Neben Kunststoffteilchen können auch Kunststoffteilchen zusammen Zellstoffteilchen/Cellulose in gleicher Weise verarbeitet werden.

Die Entsorgungsvorrichtung nach Fig. 7 ist in etwa gleich aufgebaut, wie die vorgehend beschriebene und in Fig. 6 dargestellte Entsorgungsvorrichtung, jedoch mit dem Unterschied, dass der Klappenverschluss für die Entnahmeöffnung 103 der Trommel 30 gemäß Fig. 6 im Bereich der Entnahmeöffnung 104 in dem die Trommel 30 aufnehmenden Gehäuse 21, angeordnet ist. Die Klappen sind hier mit 101', 102' bezeichnet.

Während bei den Entsorgungsvorrichtungen nach Fig. 6 und 7 von einer feststehenden Trommel 30 und einer verschieblichen stimseitigen Wandplatte 34 ausgegangen wird, die neben der horizontalen Verschiebbarkeit auch um die Trommeldrehachsenlängsrichtung 24 umlaufend angetrieben ist, besteht auch die Möglichkeit, die Trommel 30 umlaufend anzutreiben. Eine derartige Entsorgungsvorrichtung ist entsprechend den vorangehend beschriebenen und in den Fig. 6 und 7 dargestellten Entsorgungsvorrichtungen aufgebaut, nur mit dem Unterschied, dass die Trommel 30 in ihrem Gehäuse 21 nicht feststehend angeordnet ist, sondern um ihre Drehachse 24 umlaufend angetrieben wird. Bei in dem Gehäuse 21 umlaufend angetriebener Trommel 30 wird vermittels einer in der Zeichnung nicht dargestellten Steuerung der Umlauf der Trommel 30 beendet, wenn die Entnahmeöffnung 103 des Trommelgehäuses der Trommel 30 und die Entnahmeöffnung 104 des Gehäuses 21 miteinander fluchten. Ist dieser Zustand erreicht, dann werden die Klappen 101, 102 geöffnet, so dass der Trommelinhalt in die Förder-Verdichtungsschnecke 105 geleitet bzw. gesogen werden kann.

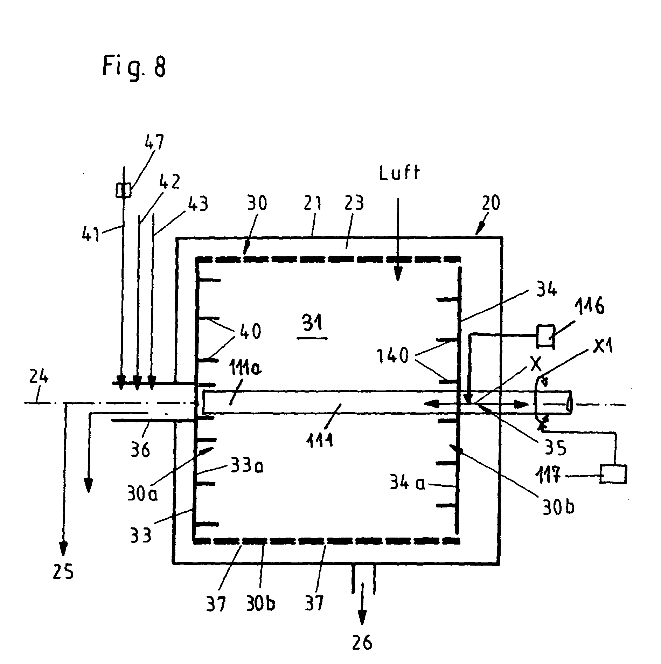

Bei der Entsorgungsvorrichtung nach Fig. 8 erfolgt die Vorschub- und Rückholbewegung der stimseitigen Wandplatte 34 der Trommel 30 vermittels eines spindelartigen Antriebes 111. Die spindelartig ausgebildete Antriebsachse 111 für die Bewegung der stimseitigen Wandplatte 34 der Trommel 30 ist durch den Innenraum 31 der Trommel 30 geführt und mit ihrem freien Ende 111a an der stimseitigen Wandplatte 33 gelagert. Der Antrieb für den Umlauf der Wandplatte 34 ist bei 116 und für das horizontale Verschieben bei 117 angeordnet

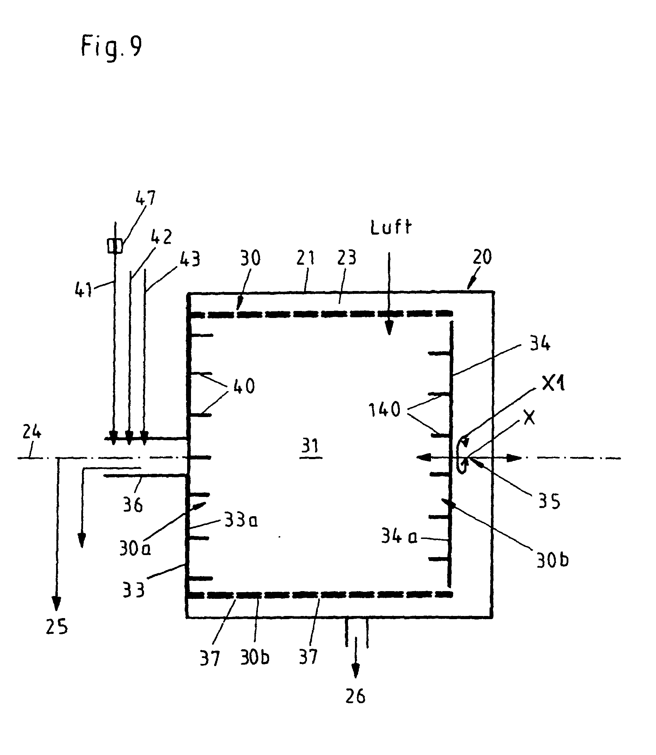

Arbeitet die Entsorgungsvorrichtung mit einer feststehenden Trommel 30, dann kann gemäß Fig. 9 die stimseitige Wandplatte 33 der Trommel 30 von der Seitenwand des Gehäuses 21 gebildet sein, in dem die Trommel 30 angeordnet ist. Die Wandplatte 33 ist somit in die stimseitige Wand des Gehäuses 21 integriert und trägt die Schneid-, Trenn- und Zerkleinerungsmesser 40.

Mit dem spindelartigen Antrieb 111 wird die horizontale Bewegung der Wandplatte 34 im Innenraum 31 der Trommel 30 erreicht. Ist der spindelartige Antrieb als Welle durch den Innenraum 31 der Trommel 30 geführt und mit ihrem freien Ende 111a an der stimseitigen Wandplatte 33 gelagert, dann wird eine stabile, verwindungsfest konstruktive Ausgestaltung der Trommel 30 erreicht, denn die spindelartige Antriebswelle 111 ist beidendig gelagert, nämlich einmal an der Wandplatte 33 und an der der Wandplatte 34 zugekehrten Wand des Gehäuses 21.

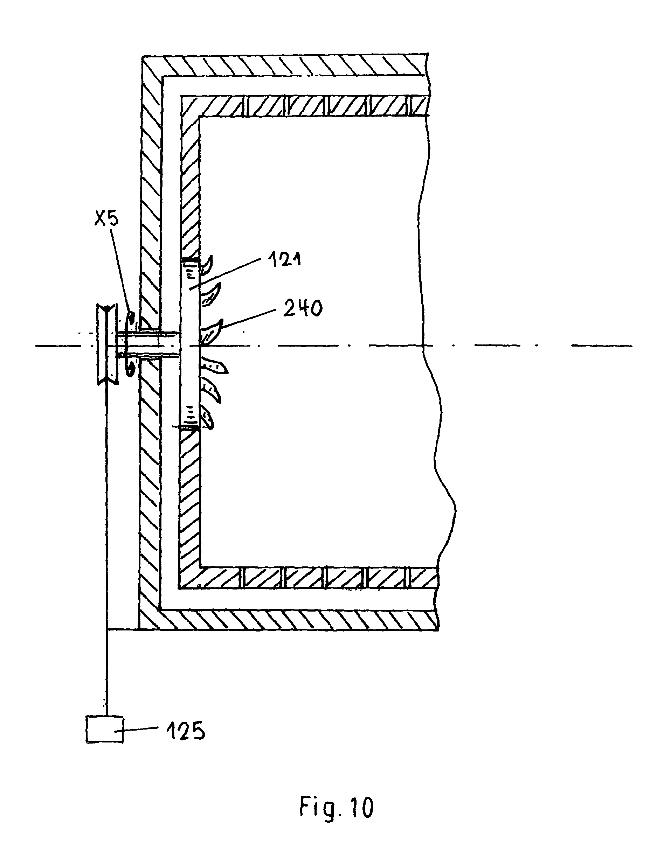

Bei der Ausführungsform gemäß Fig. 10 ist in der stirnseitigen Wandplatte 33 der Trommel 30 eine umlaufend, insbesondere schnellumlaufend angetriebene Scheibe 121 gelagert, die in den Innenraum 31 der Trommel 30 gerichtete Schneid-, Trenn- und Zerkleinerungsmesser 240 trägt. Die die Messer 240 tragende Scheibe 121 ist mittels eines Antriebes 125 in Pfeilrichtung X5 umlaufend antreibbar. Die Umlaufrichtung kann dabei beliebig gewählt werden; jedenfalls sollte der Umlauf der die Messer 240 tragenden Scheibe 121 entgegengesetzt zur Umlaufrichtung der Trommel 30 sein; die Trommel 30 kann jedoch auch feststehend sein. Der Vorteil der Verwendung der die Messer 240 tragenden, schnellumlaufend angetriebenen Scheibe 121 liegt im Zerreißen und Zerteilen verhakter und verdrillter Kunststoffteilchen und -fäden, die sich um die spindelartige Antriebswelle 111 bei Betrieb der Entsorgungsvorrichtung legen können.

Der Entsorgungsprozess mit der erfindungsgemäßen Entsorgungsvorrichtung kann sowohl bei niedrigen Temperaturen als auch bei höheren Temperaturen, z. B. oberhalb von 70° C durchgeführt werden. Bei Temperaturen oberhalb 70° C lösen sich die Pellets auf, die sich in den Inkontinenz-Artikeln befinden. Das Fahren bei höheren Temperaturen dient gleichzeitig zum Abtöten von Keimen. Höhere Temperaturen werden nur für kurze Zeit eingesetzt, jedoch nicht über die gesamte Prozessdauer. Aus dem erhaltenen Endprodukt können mittels geeigneter Vorrichtungen, wie z. B. Filter, alle Feststoffe herausgefiltert werden, die dann pelletiert werden können. Während des Prozesses werden die Gel-Körner aus dem vemetzten Bereich der Inkontinenz-Artikel aufgelöst, ebenso die einzelnen Zellstofffasern. Der Wasserzulauf zur Trommel 30 ist mit Einrichtungen versehen, um einen Rückstau bzw. Rücklauf in das Wasserversorgungssystem zu vermeiden. Mit eingeschlossen ist auch das Pelletieren der Restwertstoffe und zwar in Bezug auf die Kunststoffe und/oder Zellstoffe.

## Patentansprüche

1. Vorrichtung zur Vor-Ort-Entsorgung von Inkontinenz-Artikeln, insbesondere aus einem Gewebevlies, einer saugfähigen Zellstoffschicht, ggf. mit in die Zellstoffschicht eingebettetem Gel oder saugfähigem Granulat, einer einseitigen Außenhülle aus Kunststoff und aus Klett/Klebestreifen, Gummibändern o. dgl. als Verschlussund Haltemittel
**dadurch gekennzeichnet,**
**dass** die Vorrichtung (10) aus einem, bevorzugterweise mit einem pultartigen Gehäuseabschnitt (12) versehenen Grundgehäuse (11) besteht, in dem
- eine Einrichtung (20) aus einem trommelartigen Gehäuse (21) mit einer oberen Einfüllöffnung (22) und einer im Innenraum (23) des Gehäuses (21) angeordneten, feststehenden oder um eine horizontale Drehachse (24) einseitig oder wechselseitig mittels einer ersten Antriebseinrichtung (25) in Umlauf versetzbare zylindrische Trommel (30) mit einer Einfüllöffnung (32) für das Entsorgungsgut und mit zwei die beiden Trommelöffnungen (30a, 30b) stirnseitig verschließenden Wandplatten (33, 34), von denen die erste Wandplatte (33) mit dem Trommelgehäuse verbunden ist und die zweite Wandplatte (34) mittels einer zweiten Antriebseinrichtung (35) in Trommeldrehachsentängsrichtung verschiebbar oder verschiebbar und um ihre Mittelachse drehbar ausgebildet ist, wobei die beiden stimseitigen Trommelwandplatten (34, 35) an ihren einander gegenüberliegenden Wandflächen (33a, 34a) in den Trommelinnenraum (31) hineinreichende Schneid-, Trenn- und Zerkleinerungsmesser (40, 140) tragen,
wobei das die Trommel (30) aufnehmende Gehäuse (21) je einen Zulauf (41, 42, 43) oder einen gemeinsamen Zulauf (41) für Waschwasser, für eine Hygieneflüssigkeit zum Unterdrücken von Gerüchen und für Chemikalien, z. B. Desinfektionsmittel, in pulverförmigem oder flüssigem Zustand versehen ist, und wobei die Trommel (30) im Bereich ihrer ersten feststehenden Wandplatte (33) mit einer mit der ersten Antriebseinrichtung (25) verbundenen hohlzylindrischen Nabe oder Stützen (36) verbunden ist.
- eine über einen am Boden des trommelartigen Gehäuses (21) angeordneten Ablaufstutzen (26) mit dem Trommelinnenraum (31) verbundenen Pumpe (50), vermittels der das Waschwasser mit den in dem Waschwasser gelösten Bestandteilen des Entsorgungsgutes aus dem Trommelinnenraum (31) abgesogen und abgeleitet wird,
- eine Heizplatte (60) unterhalb des Trommelgehäuses (21) zum Trocknen der in der Trommel (30) zurückgebliebenen, nicht vom Waschwasser gelösten Bestanteile des Entsorgungsgutes,
- eine staubsaugerartige Einrichtung (70) zum Absaugen der im Trommelinnenraum (31) verbliebenen, getrockneten nicht wasserlösbaren Bestandteile des Entsorgungsgutes durch die Nabe (36) und zum Ansaugen der Luft aus dem Innenraum (31) der Trommel (30) durch die lochartigen Durchbrechungen (37) in der umlaufenden Trommelwand (30b) zum Ablösen und Entfernen der an der inneren Trommelwandfläche haftenden festen Bestandteile des Entsorgungsgutes,
- ein mit der staubsaugerartigen Einrichtung (70) verbundener Sammelbehälter (71) mit einem die abgesogenen festen Bestandteile des Entsorgungsgutes aufnehmenden Behältnis, Beutel oder Sack, angeordnet sind, wobei die Steuerung des Zulaufs für das Waschwasser, für die Hygleneflüssigkeit und für die Chemikalie, die Steuerung der ersten Antriebseinrichtung (25) für den Trommelumlauf und die wechselseitige Trommel-Hin-und-Herbewegung und der zweiten Antriebseinrichtung (35) für die horizontale Verschiebebewegung der verschiebbaren Wandplatte (34) der Trommel (30) und die Steuerung der Absaugeinrichtung (70) für die festen Bestandteile des Entsorgungsgutes aus dem Trommelinnenraum (31) und die Steuerung der Pumpe (50) in einem Programmschaltwerk (80) zusammengefasst sind oder vermittels einer freiprogrammierbaren Steuerung steuerbar ist.

2. Vorrichtung nach Anspruch 1,
**dadurch gekennzeichnet,**
**dass** die Nabe oder Stutzen (36) der Trommel (30) mit einem Zuführungsstutzen (44) für die gleichzeitige oder einzelne Zuführung der Waschflüssigkeit, der Hygieneflüssigkeit und die Chemikalie versehen ist.

3. Vorrichtung nach einem der Ansprüche 1 oder 2,
**dadurch gekennzeichnet,**
**dass** in der Zuführungsleitung für das Waschwasser eine Heizvorrichtung (47), beispielsweise ein Durchlauferhitzer, zum Erwärmen des Waschwassers auf etwa 95 °C angeordnet ist.

4. Vorrichtung nach einem der Ansprüche 1 bis 3,
**dadurch gekennzeichnet,**
**dass** die zweite Antriebswelle (35) für die Verschiebebewegung der zweiten verschieblichen Wandplatte (34) an der Stirnseite der Trommel (30) als Spindetantrieb ausgebildet ist.

5. Vorrichtung nach einem der Ansprüche 1 bis 4,
**dadurch gekennzeichnet,**
**dass** zur Erziehung eines unterschiedlichen Schneid- und Teilungseffektes in der das Entsorgungsgut enthaltenen Trommel (30) die Schneid-, Trenn- und Zerkleinerungsmesser (40, 140) an den sich gegenüberliegenden Wandflächen (33a, 34a) der beiden stimseitigen Wandplatten (33, 34) der Trommel (30) sich gegenüberliegend und in unterschiedlichen Abständen zueinander angeordnet sind.

6. Vorrichtung nach einem der Ansprüche 1 bis 5,
**dadurch gekennzeichnet,**
**dass** das Trommelgehäuse der in dem Gehäuse (21) feststehend angeordneten Trommel (30) mit einer stimseitigen mit der Trommel festverbundenen Wandplatte (33) und mit einer in Trommeldrehachsenlängsrichtung (24) verschiebbaren und um die Trommdrehachsenlängsrichtung (24) umlaufend angetriebenen stimseitigen Wandplatte (34) mit einer mittels Klappen (101, 102) verschließbaren Entnahmeöffnung (103) für das Entsorgungsgut versehen ist, und dass das die Trommel (30) aufnehmende Gehäuse (21) eine mit der verschließbaren Trommelentnahmeöffnung (103) deckende bzw. fluchtende Entnahmeöffnung (104) mit einer sich an diese anschließenden Förder-Verdichtungsschnecke (105) zum Ableiten reparierter Kunststoffe bzw. Kunststoffteilchen aufweist.

7. Vorrichtung nach einem der Ansprüche 1 bis 5,
**dadurch gekennzeichnet,**
**dass** das Trommelgehäuse der in dem Gehäuse (21) feststehend angeordneten Trommel (30) mit einer stimseitigen mit der Trommel festverbundenen Wandplatte (33) und mit einer in Trommeldrehachsenlängsrichtung (24) verschiebbaren und um die Trommeldrehachsenlängsrichtung (24) umlaufend angetriebenen stirnseitigen Wandplatte (34) mit einer Entnahmeöffnung (103) für das Entsorgungsgut versehen ist, und dass das die Trommel (30) aufnehmende Gehäuse (21) eine mit der Trommetentnahmeöffnung (103) deckende bzw. fluchtende mittels Klappen (101', 102') verschließbare Entnahmeöffnung (104) mit einer sich an diese anschließenden Förder-Verdichtungsschnecke (105) zum Ableiten separierter Kunststoffe bzw. Kunststoffteilchen aufweist.

8. Vorrichtung nach einem der Ansprüche 6 und 7,
**dadurch gekennzeichnet,**
**dass** bei in dem Gehäuse (21) einlaufend angetriebener Trommel (30) vermittels einer Steuerung der Umlauf der Trommel (30) beendet wird, wenn die Entnahmeöffnung (103) des Trommelgehäuses der Trommel (30) und die Entnahmeöffnung (104) des Gehäuses (21) miteinander fluchten.

9. Vorrichtung nach einem der Ansprüche 6 bis 8;
**dadurch gekennzeichnet,**
**dass** sich an die Förder-Verdichtungsschnecke (105) eine beheizbare Ableitung (106) anschließt, die in einem Auffangbehälter (107) mündet.

10. Vorrichtung nach einem der Ansprüche 1 bis 9,
**dadurch gekennzeichnet,**
**dass** die Vorschub- und Rückholbewegung der stimseitigen Wandplatte (34) der Trommel (30) vermittels eines spindelartigen Antriebes erfolgt.

11. Vorrichtung nach einem der Ansprüche 1 bist 10,
**dadurch gekennzeichnet,**
**dass** die Antriebsachse (111) für die Bewegung der stirnseitigen Wandplatte (34) der Trommel (30) durch den Innenraum (31) der Trommel (30) geführt ist mit ihrem freien Ende (111a) an der stirnseitigen Wandplatte (33) gelagert ist.

12. Vorrichtung nach einem der Ansprüche 1 bis 11,
**dadurch gekennzeichnet,**
**dass** die stimseitige Wandplatte (33) der Trommel (30) von der Seitenwand des Gehäuses (21) gebildet ist, um den die Trommel (30) angeordnet ist.

13. Vorrichtung nach einem der Ansprüche 1 bis 12,
**dadurch gekennzeichnet,**
**dass** in der stimseitigen Wandplatte (33) der Trommel (30) eine umlaufend, insbesondere schnellumlaufend angetriebene Scheibe (121) gelagert ist, die in den Innenraum (31) der Trommel (30) gerichtete Schneid-, Trenn- und Zerkleinerungsmesser (240) trägt, wobei der Umlauf der Scheibe (121) in der einen oder anderen Umlaufrichtung, bevorzugterweise entgegengesetzt zur Umlaufrichtung der Trommel (30) erfolgt.

14. Verfahren zur Vor-Ort-Entsorgung von Inkontinenz-Artikeln, insbesondere aus einem Gewebevlies, einer saugfähigen Zellstoffschicht, ggf. mit in die Zellstoffschicht eingebettetem Gel oder saugfähigem Granulat, einer einseitigen Außenhülle aus Kunststoff und aus Klett/Klebestreifen, Gummibändern o. dgl. als Verschlussund Haltemittel unter Verwendung der Vorrichtung nach einem der Ansprüche 1 bis 5,
**dadurch gekennzeichnet,**
**dass** das Verfahren folgende Stufen umfasst:
a.) Befüllen der Trommel (30) der Entsorgungsvorrichtung (10) mit dem Entsorgungsgut,
b.) Befüllen der Trommel (30) mit auf etwa 95 °C erwärmten Waschwasser, Hygieneflüssigkeit zum Unterdrücken von Gerüchen und Chemikalien,
c.) wechselseitige Steuerung der Umlaufbewegung der Trommel (30),
d.) Verändern der Größe des Trommelinnenraumes und somit verändern des Pressdruckes auf das Entsorgungsgut im Trommelinnenraum durch horizontales Hin- und Herverschieben der verschieblichen Stimwandplatte (34) der Trommel (30) bei gleichzeitigem Zerkleinern des Entsorgungsgutes,
e.) Ableiten des Waschwassers mit dem in diesem gelösten Bestandteilen des Entsorgungsgutes,
f.) Trocknen der im Trommelinnenraum verbliebenen wasserunlöslichen Bestandteile des Entsorgungsgutes bei gleichzeitiger Trommel-Hin-und-Herbewegung und falls erforderlich Teilchenzerkleinerung,
g.) Absaugen oder Ableiten der getrockneten wasserunlöslichen Bestandteile des Entsorgungsgutes aus dem Trommelinnenraum in einen Entsorgungsbehälter,
h.) Absaugen der Luft aus dem Trommelinnenraum durch die lochartigen Durchbrechungen in der Trommelwand und gleichzeitigem Mitreißen (Losreißeffekt) der an der Trommelinnenwand haftenden Bestandteile des Entsorgungsgutes bei gleichzeitigem Verschieben der verschieblichen Trommelwandplatte in Richtung zur feststehenden Trommelwandplatte zur Verkleinerung des Trommelinnenraumes bei gleichzeitiger Erhöhung der Durchtrittsgeschwindigkeit der Luft durch die lochartigen Durchbrechungen,
i.) Weiterleiten der in Stufe h.) abgesogenen Luft mit den festen, zerkleinerten Bestandteilen des Entsorgungsgutes und Trennen von Luft und der festen Bestandteile mit anschließenden Sammeln der festen Bestandteile zur Entsorgung oder zu Restwertstoffen oder Zuführen als Restwertstoffe dem entsprechenden Kreislauf.

## Claims

1. A device for the in-situ disposal of incontinence articles, in particular made of a non-woven fabric, an absorbent cellulose layer, eventually with a gel embedded into the cellulose layer or with absorbent granulates, an one-sided outer shell of synthetic material and of Velcro/adhesive strips, rubber bands or the like as closing and holding means,
**characterized in**
**that** the device (10) is made of a basic housing (11) preferably provided with a desk-type housing section (12) in which are placed
- a device (20) made of a drum-type housing (21) with an upper feed opening (22) and a cylindrical drum (30) placed in the inner space (23) of the housing (21), stationary or which can be set rotating about a horizontal rotational axis on one side or alternately by means of a first driving device (25), drum with a feed opening (32) for the articles to dispose of and with two wall plates (33, 34) which close the two drum openings (30a, 30b) on the front side, the first wall plate (33) of which is connected with the drum housing and the second wall plate (34) is configured displaceable in drum rotational axis lengthwise direction by means of a second driving device (35) or displaceable and rotatable about its center axle, whereby both front side drum wall plates (34, 35) carry cutting, separating and disintegrating knives (40, 140) penetrating into the drum inner space (31) on their opposed wall faces (33a, 34a), whereby the housing (21) receiving the drum (30) is provided with a respective inlet (41, 42, 43) or with a common inlet (41) for the wash water, for a sanitary liquid for suppressing odours and for chemicals, for example disinfectants, in powdered or liquid state and whereby the drum (30) is connected in the area of its first stationary wall plate (33) with a hollow cylindrical hub or nozzle (36) connected with the first driving device (25),
- a pump (50) connected with the drum inner space (31) by a discharge nozzle (26) placed on the bottom of the drum-type housing (21), pump by means of which the wash water is sucked off from the drum inner space (31), with the constituents of the material to dispose of which are dissolved in the wash water, and discharged,
- a heating plate (60) below the drum housing (21) for drying the constituents of the material to dispose of which remained in the drum (30) and which are not dissolved by the wash water,
- a vacuum cleaner type device (70) for sucking off the dried non water soluble constituents of the material to dispose of which remained in the drum inner space (31) through the nozzle (36) and for sucking off the air from the inner space (31) of the drum (30) through the hole-type openings (37) in the rotating drum wall (30b) for loosening and removing the solid constituents of the material to dispose of which are adhering to the inner drum wall face,
- a collecting receiver (71) connected with the vacuum cleaner type device (70) with a container, bag or sack receiving the sucked solid constituents of the material to dispose of, whereby the control of the supply for the washwater, for the sanitary liquid and for the chemical, the control of the first driving device (25) for the drum rotation and the alternate to-and-fro motion of the drum and of the second driving device (35) for the horizontal displacement of the displaceable wall plate (34) of the drum (30) and the control of the sucking device (70) for the solid constituents of the material to dispose of from the drum inner space (31) and the control of the pump (50) are combined in a programmable controller (80) or are controllable by means of a free programmable control.

2. A device according to claim 1,
**characterized in**
**that** the hub or nozzle (36) of the drum (30) is provided with a feeding nozzle (44) for the simultaneous or single supply of the washing liquid, the sanitary liquid and the chemical.

3. A device according to any of the claims 1 or 2,
**characterized in**
**that** a heating device (47), for example a flow heater, is placed in the feeding duct for the wash water for heating the wash water to approximately 95 °C.

4. A device according to any of the claims 1 to 3,
**characterized in**
**that** the second driving shaft (35) for the displacement of the second displaceable wall plate (34) on the front side of the drum (30) is configured as a spindle drive.

5. A device according to any of the claims 1 to 4,
**characterized in**
**that**, for achieving a varying cutting and dividing effect in the drum (30) containing the material to dispose of, the cutting, separating and disintegrating knives (40, 140) are placed on the opposed wall faces (33a, 34a) of the two front side wall plates (33, 34) of the drum (30) opposing to each other and at different distances from each other.

6. A device according to any of the claims 1 to 5,
**characterized in**
the drum housing of the drum (30) placed stationary in the housing (21) with a front side wall plate (33) fixedly connected with the drum and with a front side wall plate (34) displaceable in the drum rotation axis longitudinal direction (24) and driven rotating about the drum rotation axis longitudinal direction (24) is provided with a withdrawal opening (103) closable by means of flaps (101, 102) for the material to dispose of and that the housing (21) receiving the drum (30) shows a withdrawal opening (104) coinciding with the closable drum withdrawal opening (103), or aligned therewith, with a conveying/compression screw (105) attached to it for carrying off separated plastics or plastics particles.

7. A device according to any of the claims 1 to 5,
**characterized in**
**that** the drum housing of the drum (30) placed stationary in the housing (21) with a front side wall plate (33) fixedly connected with the drum and with a front side wall plate (34) displaceable in the drum rotation axis longitudinal direction (24) and driven rotating about the drum rotation axis longitudinal direction (24) is provided with a withdrawal opening (103) for the material to dispose of and that the housing (21) receiving the drum (30) shows a withdrawal opening (104) coinciding with the drum withdrawal opening (103), or aligned therewith, which is closable by means of flaps (101', 102') with a conveying/compression screw (105) attached to it for carrying off separated plastics or plastics particles.

8. A device according to any of the claims 6 and 7,
**characterized in**
**that**, when the drum (30) is driven rotating in the housing (21), the rotation of the drum (30) is terminated by means of a control, when the withdrawal opening (103) of the drum housing of the drum (30) and the withdrawal opening (104) of the housing (21) are aligned with each other.

9. A device according to any of the claims 6 to 8,
**characterized in**
**that** a heatable discharge duct (106) which runs into a collecting container (107) follows the conveying/compression screw (105).

10. A device according to any of the claims 1 to 9,
**characterized in**
**that** the forward movement and the return motion of the front side wall plate (34) of the drum (30) takes place by means of a spindle type drive.

11. A device according to any of the claims 1 to 10,
**characterized in**
**that** the driving axis (111) for the movement of the front side wall plate (34) of the drum (30) is guided through the inner space (31) of the drum (30) and is positioned with its free end (111a) on the front side wall plate (33).

12. A device according to any of the claims 1 to 11,
**characterized in**
**that** the front side wall plate (33) of the drum (30) is formed by the side wall of the housing (21) around which the drum (30) is placed.

13. A device according to any of the claims 1 to 12,
**characterized in**
**that** a disk (121) driven rotating, in particular quick rotating, is positioned in the front side wall plate (33) of the drum (30), this disk carrying cutting, separating and disintegrating knives (240) directed into the inner space (31) of the drum (30), the rotation of the disk (121) taking place in the one rotation direction or in the other rotation direction, preferably contrary to the rotation direction of the drum (30).

14. A method for the in situ disposal of incontinence articles, in particular made of a nonwoven fabric, of an absorbent cellulose layer, eventually with a gel embedded into the cellulose layer or with absorbent granulates, of an one-sided outer shell of synthetic material and of Velcro/adhesive strips, rubber straps or the like as closing and retaining means, by using the device according to any of the claims 1 to 5,
**characterized in**
**that** the method comprises the following steps:
a.) filling of the drum (30) of the disposal device (10) with the material to dispose of,
b.) filling of the drum (30) with wash water heated to approximately 95° C, sanitary liquid for suppressing odours and chemicals,
c.) alternate control of the rotation motion of the drum (30),
d.) variation of the size of the drum inner space and thus variation of the pressing power onto the material to dispose of in the drum inner space through horizontal to-and-fro displacement of the displaceable front wall plate (34) of the drum (30) by simultaneous disintegration of the material to dispose of,
e.) discharge of the wash water with the constituents dissolved therein of the material to dispose of,
f.) drying of the water insoluble constituents of the material to dispose of which remained in the drum inner space by simultaneous drum to-and-fro motion and, if necessary, particles disintegration,
g.) sucking off or discharge of the dried water insoluble constituents of the material to dispose of from the drum inner space into a disposal container,
h.) sucking off of air from the drum inner space through the hole type openings in the drum wall and simultaneous entrainment (pull off effect) of the constituents of the material to dispose of which are adhering to the drum inner wall by simultaneously displacing the displaceable drum wall plate in direction of the stationary drum wall plate for reducing the drum inner space by simultaneously increasing the passage rate of the air through the hole type openings,
i.) transmission of the air sucked off in step h.) with the solid disintegrated constituents of the material to dispose of and separation of the air and of the solid constituents with subsequent collecting of the solid constituents for disposal or to residual valuable substances or supplying as residual valuable substances to the corresponding circuit.

## Revendications

1. Dispositif pour l'évacuation sur place d'articles pour incontinence, constitués en particulier par un tissu non-tissé, une couche de cellulose absorbante, éventuellement avec un gel enrobé dans la couche de cellulose ou des granulés absorbants, une enveloppe extérieure d'un côté en matière synthétique et des bandes adhésives/Velcro, des bandes de caoutchouc ou équivalent comme moyen de fermeture et de fixation,
**caractérisé en ce**
**que** le dispositif (10) est constitué par un bâti de base (11), pourvu de préférence d'une section de bâti du type pupitre (12), dans lequel il est placé
- un dispositif (20) constitué par un bâti du type tambour (21) avec une ouverture de remplissage supérieure (22) et un tambour cylindrique (30), placé dans l'espace intérieur (23) du bâti (21), stationnaire ou pouvant être mis en rotation autour d'un axe de rotation horizontal (24) d'un côté ou de manière alternée au moyen d'un premier dispositif d'entraînement (25), avec une ouverture de remplissage (32) pour les matières à évacuer et avec deux plaques de paroi (33, 34) fermant les deux ouvertures de tambour (30a, 30b) sur le côté frontal, parmi lesquelles la première plaque de paroi (33) est reliée au bâti du tambour et la seconde plaque de paroi (34) est configurée déplaçable au moyen d'un second dispositif d'entraînement (35) dans le sens longitudinal de l'axe de rotation du tambour et rotative autour de son axe central, les deux plaques de paroi du tambour (34, 35) du côté frontal portant, sur leurs surfaces de paroi opposées l'une à l'autre (33a, 34a), des couteaux de coupe, de sectionnement et de broyage (40, 140) qui pénètrent dans l'espace intérieur du tambour (31), le bâti (21) qui reçoit le tambour (30) étant pourvu d'une arrivée respective (41, 42, 43) ou d'une arrivée commune (41) pour de l'eau de lavage, pour un liquide d'hygiène pour supprimer les odeurs et pour des substances chimiques, par exemple pour des désinfectants, à l'état poudreux ou liquide et le tambour (30) étant relié dans la zone de sa première plaque de paroi stationnaire (33) avec un moyeu ou une tubulure (36) en forme de cylindre creux relié au premier dispositif d'entraînement (25),
- une pompe (50), reliée par une tubulure d'évacuation (26) placée au fond du bâti de type tambour (21) à l'espace intérieur du tambour (31), au moyen de laquelle l'eau de lavage est aspirée avec les constituants des matières à évacuer dissous dans l'eau de lavage et est évacuée,
- une plaque de chauffage (60) au-dessous du bâti du tambour (21) pour sécher les constituants des matières à évacuer qui ne sont pas dissous par l'eau de lavage et qui sont restés dans le tambour (30),
- un dispositif du type aspirateur (70) pour aspirer les constituants des matières à évacuer séchés, non solubles dans l'eau et qui sont restés dans l'espace intérieur du tambour (31) par le moyeu (36) et pour aspirer l'air de l'espace intérieur (31) du tambour (30) par les découpures du type trou (37) dans la paroi rotative du tambour (30b) pour détacher et enlever les constituants solides des matières à évacuer qui adhèrent à la surface de paroi intérieure du tambour,
- un récipient collecteur (71) relié au dispositif du type aspirateur (70) avec un récipient, sachet ou sac qui reçoit les constituants solides aspirés des matières à évacuer, la commande de l'arrivée pour l'eau de lavage, pour le liquide d'hygiène et pour la substance chimique, la commande du premier dispositif d'entraînement (25) pour la rotation du tambour et le mouvement alterné de va-et-vient du tambour et du second dispositif d'entraînement (35) pour le mouvement de déplacement horizontal de la plaque de paroi déplaçable (34) du tambour (30) et la commande du dispositif d'aspiration (70) pour les constituants solides des matières à évacuer de l'espace intérieur du tambour (31) et la commande de la pompe (50) étant réunies dans un programmateur (80) ou pouvant être commandées au moyen d'une commande programmable librement.

2. Dispositif selon la revendication 1,
**caractérisé en ce**
**que** le moyeu ou la tubulure (36) du tambour (30) est pourvu d'une tubulure d'alimentation (44) pour l'alimentation simultanée ou individuelle du liquide de lavage, du liquide d'hygiène et de la substance chimique.

3. Dispositif selon l'une des revendications 1 ou 2,
**caractérisé en ce**
**qu'**un dispositif de chauffage (47), par exemple un chauffe-eau instantané, est placé dans la conduite d'alimentation de l'eau de lavage pour réchauffer l'eau de lavage à environ 95°C.

4. Dispositif selon l'une des revendications 1 à 3,
**caractérisé en ce**
**que** le second arbre d'entraînement (35) pour le mouvement de déplacement de la seconde plaque de paroi déplaçable (34) sur le côté frontal du tambour (30) est configuré comme une commande à broche.

5. Dispositif selon l'une des revendications 1 à 4,
**caractérisé en ce**
**que**, pour obtenir un effet de coupe et de sectionnement différencié dans le tambour (30) qui contient les matières à évacuer, les couteaux de coupe, de sectionnement et de broyage (40, 140) sont placés sur les surfaces de paroi opposées (33a, 34a) des deux plaques de paroi du côté frontal (33, 34) du tambour (30) en étant opposés et à différentes distances l'un par rapport à l'autre.

6. Dispositif selon l'une des revendications 1 à 5,
**caractérisé en ce**
**que** le bâti du tambour du tambour (30) placé stationnaire dans le bâti (21) est pourvu d'une plaque de paroi (33) côté frontal reliée de manière fixe au tambour et d'une plaque de paroi (34) côté frontal déplaçable dans le sens longitudinal de l'axe de rotation du tambour (24) et entraînée en rotation autour du sens longitudinal de l'axe de rotation du tambour (24) avec une ouverture de prélèvement (103) pour les matières à évacuer pouvant être fermée au moyen de clapets (101, 102) et que le bâti (21) qui reçoit le tambour (30) présente une ouverture de prélèvement (104) qui coïncide ou qui est alignée sur l'ouverture de prélèvement du tambour (103) qui peut être fermée, ouverture avec une hélice de transport-compression (105) qui s'y rattache pour évacuer les matières synthétiques ou particules synthétiques séparées.

7. Dispositif selon l'une des revendications 1 à 5,
**caractérisé en ce**
**que** le bâti du tambour du tambour (30) placé stationnaire dans le bâti (21) est pourvu d'une plaque de paroi (33) côté frontal reliée de manière fixe au tambour et d'une plaque de paroi (34) côté frontal déplaçable dans le sens longitudinal de l'axe de rotation du tambour (24) et entraînée en rotation autour du sens longitudinal de l'axe de rotation du tambour (24) avec une ouverture de prélèvement (103) pour les matières à évacuer et que le bâti (21) qui reçoit le tambour (30) présente une ouverture de prélèvement (104) qui coïncide ou qui est alignée sur l'ouverture de prélèvement du tambour (103) et qui peut être fermée au moyen de clapets (101', 102') , ouverture avec une hélice de transport-compression (105) qui s'y rattache pour évacuer les matières synthétiques ou particules synthétiques séparées.

8. Dispositif selon l'une des revendications 6 et 7,
**caractérisé en ce**
**que**, lorsque le tambour (30) est entraîné entrant dans le bâti (21), la rotation du tambour (30) est terminée au moyen d'une commande lorsque l'ouverture de prélèvement (103) du bâti du tambour du tambour (30) et l'ouverture de prélèvement (104) du bâti (21) sont alignées l'une sur l'autre.

9. Dispositif selon l'une des revendications 6 à 8,
**caractérisé en ce**
**qu'**une évacuation pouvant être chauffée (106) se rattache à l'hélice de transport-compression (105), cette évacuation débouchant dans un réservoir collecteur (107).

10. Dispositif selon l'une des revendications 1 à 9,
**caractérisé en ce**
**que** le mouvement d'avancement et de rappel de la plaque de paroi côté frontal (34) du tambour (30) est effectué au moyen d'une commande de type broche.

11. Dispositif selon l'une des revendications 1 à 10,
**caractérisé en ce**
**que** l'axe d'entraînement (111) pour le mouvement de la plaque de paroi côté frontal (34) du tambour (30) est guidé à travers l'espace intérieur (31) du tambour (30) et est positionné avec son extrémité libre (111a) sur la plaque de paroi côté frontal (33).

12. Dispositif selon l'une des revendications 1 à 11,
**caractérisé en ce**
**que** la plaque de paroi côté frontal (33) du tambour (30) est formée par la paroi latérale du bâti (21) autour de laquelle le tambour (30) est placé.

13. Dispositif selon l'une des revendications 1 à 12,
**caractérisé en ce**
**qu'**un disque (121) entraîné rotatif, en particulier à rotation rapide, est positionné dans la plaque de paroi côté frontal (33) du tambour (30), disque qui porte des couteaux de coupe, de sectionnement et de broyage (240) dirigés dans l'espace intérieur (31) du tambour (30), la rotation du disque (121) se faisant dans l'un ou l'autre sens de rotation, de préférence en sens opposé au sens de rotation du tambour (30).

14. Procédé pour l'évacuation sur place d'articles pour incontinence, constitués en particulier par un tissu non-tissé, une couche de cellulose absorbante, éventuellement avec un gel enrobé dans la couche de cellulose ou des granulés absorbants, une enveloppe extérieure d'un côté en matière synthétique et des bandes adhésives/Velcro, des bandes de caoutchouc ou équivalent comme moyen de fermeture et de fixation en utilisant le dispositif selon l'une des revendications 1 à 5,
**caractérisé en ce**
**que** le procédé comprend les étapes suivantes :
a.) Remplissage du tambour (30) du dispositif d'évacuation (10) avec les matières à évacuer,
b.) Remplissage du tambour (30) avec de l'eau de lavage chauffée à environ 95 °C, du liquide d'hygiène pour supprimer les odeurs et des substances chimiques,
c.) Commande alternée du mouvement de rotation du tambour (30),
d.) Variation de la grandeur de l'espace intérieur du tambour et donc variation de la pression de compression sur les matières à évacuer dans l'espace intérieur du tambour par déplacement de va-et-vient horizontal de la plaque de paroi frontale déplaçable (34) du tambour (30) avec broyage simultané des matières à évacuer,
e.) Evacuation de l'eau de lavage avec les constituants des matières à évacuer dissous dans celle-ci,
f.) Séchage des constituants des matières à évacuer insolubles dans l'eau restés dans l'espace intérieur du tambour avec déplacement de va-et-vient simultané du tambour et, si nécessaire, broyage des particules,
g.) Aspiration ou évacuation des constituants séchés insolubles dans l'eau des matières à évacuer de l'espace intérieur du tambour dans un réservoir d'évacuation,
h.) Aspiration de l'air de l'espace intérieur du tambour par les découpures du type trou de la paroi du tambour et entraînement simultané (effet de déchirement) des constituants des matières à évacuer qui adhèrent à la paroi intérieure du tambour avec déplacement simultané de la plaque de paroi du tambour déplaçable en direction de la plaque de paroi du tambour stationnaire pour réduire l'espace intérieur du tambour avec augmentation simultanée de la vitesse de passage de l'air par les découpures du type trou,
i.) Transmission de l'air aspiré à l'étape h.) avec les constituants broyés solides des matières à évacuer et séparation de l'air et des constituants solides avec collecte ensuite des constituants solides pour l'évacuation ou pour les matières résiduelles ou amenée comme matières résiduelles au circuit correspondant.
